# EUROPÄISCHE PATENTSCHRIFT

(11) **EP 3 362 948 B1**
(45) Veröffentlichungstag und Bekanntmachung des Hinweises auf die Patenterteilung: **02.12.2020**
(21) Anmeldenummer: 16781789.9
(22) Anmeldetag: 14.10.2016
(51) Int. Cl.: G06K 19/07, G06K 19/077

(54) **VERFAHREN ZUR HERSTELLUNG EINES WERT- ODER SICHERHEITS- ODER AUSWEISDOKUMENTS UND WERT- ODER SICHERHEITS- ODER AUSWEISDOKUMENT**
METHOD FOR PRODUCING VALUE, OR SECURITY, OR IDENTITY DOCUMENTS AND VALUE, OR SECURITY, OR IDENTITY DOCUMENT
PROCÉDÉ DE PRODUCTION D'UN DOCUMENT DE VALEUR, DE SÉCURITÉ OU D'IDENTITÉ ET DOCUMENT DE VALEUR, DE SÉCURITÉ OU D'IDENTITÉ

(30) Priorität: 16.10.2015 DE 102015220243
(43) Veröffentlichungstag der Anmeldung: 22.08.2018
(73) Patentinhaber: Bundesdruckerei GmbH, 10969 Berlin (DE)
(72) Erfinder: FISCHER, Walther, 13507 Berlin (DE); ANTONCZIK, Boris, 16567 Schönfließ (DE)
(74) Vertreter: Richardt Patentanwälte PartG mbB
(86) Internationale Anmeldenummer: PCT/EP2016/074674
(87) Internationale Veröffentlichungsnummer: WO 2017/064238

(56) Entgegenhaltungen:
- DE-A1- 19 705 615
- DE-U1- 29 717 395
- DE-U1- 29 923 432
- GB-A- 2 308 947

## Beschreibung

Die Erfindung betrifft ein Verfahren zur Herstellung eines Wert- oder Sicherheitsdokuments mit einer Chipkarte sowie ein solches Wert- oder Sicherheitsdokument.

Aus dem Stand sind verschiedene Herstellungsverfahren für Wert- oder Sicherheitsdokumente mit Chipkarten aus Kunststoff bekannt. Die Chipkarten haben einen innenliegenden Chip, auf dem dokumenten- und/oder personenspezifische Informationen gespeichert und über eine in der Chipkarte vorgesehene Schnittstelle ausgelesen werden können. Beispielsweise können solche Wert- oder Sicherheitsdokuumente mittels Kunststoff -Spritzgußverfahren oder durch Lamination hergestellt werden. Alternativ können auch 3D-Druckverfahren verwendet werden.

Gebrauchsmusterschrift DE 29923432 U1 beschreibt eine multifunktionelle Chipkarte zur qualitativen und/oder quantitativen Erfassung, Verarbeitung und/oder Speicherung von Daten, bei der auf und/oder in ihr Funktionselemente, die funktionell miteinander verbunden sind, angeordnet sind. Alle Funktionselemente liegen gemeinsam in ihren Abmessungen innerhalb der Abmessungen des Kartenformates der multifunktionalen Chipkarte. Die Sensoren und die galvanischen Elemente werden durch Polymerdickschichttechnik und/oder Cermettechnik hergestellt. Bei dem Sensor kann es sich um einen Temperatursensor handeln. Die Sensoren werden für verschiedene Zwecke, insbesondere chemische Analysen und für medizinische Analysen verwendet.

Abhängig vom jeweils verwendeten Herstellungsverfahren wirken während des Herstellungsverfahrens hohe Temperaturen und/oder Drücke auf die elektronischen Bauteile einer solchen Chipkarte. Diese Temperaturen und die Drücke sind einerseits hoch genug sein, um eine zuverlässige Herstellung des Kartenkörpers sicherzustellen. Beispielsweise muss bei einem Laminationsverfahren sichergestellt werden, das sich die einzelnen Lagen ausreichend fest miteinander verbinden. Andererseits müssen zu hohe Temperaturen und Drücke vermieden werden, um eine Schädigung des Materials und der elektronischen Bauteile zu verhindern.

In der Werkzeugform für die Herstellung der Chipkarten können zwar entsprechende Sensoren angeordnet werden. Diese Sensoren können aber nur die Umgebungsparameter an der Oberfläche der Chipkarte und nicht die tatsächlich auf den Chip wirkenden Parameter erfassen. Für eine Qualitätskontrolle ist es bisher erforderlich, einzelne Chipkarten zu zerstören, um beispielsweise prüfen zu können, ob Temperatur und Druck innerhalb der Karte ausreichend waren, um eine zuverlässige Lamination zu erreichen.

Aufgabe der Erfindung ist es, ein Verfahren zur Herstellung eines Wert-, Sicherheits- oder Ausweisdokuments bereitzustellen, das eine einfachere Qualitätssicherung des Wert- oder Sicherheitsdokuments während der Herstellung ermöglicht.

Des Weiteren soll ein mit einem solchen Verfahren hergestelltes Wert-, Sicherheits- oder Ausweisdokument bereitgestellt werden.

Die der Erfindung zugrunde liegenden Aufgaben werden mit den Merkmalen der unabhängigen Patentansprüche gelöst. Ausführungsformen der Erfindung sind in den abhängigen Ansprüchen angegeben.

Ausführungsformen der Erfindung sind besonders vorteilhaft, da es durch die Sensoren möglich ist, die Umgebungsparameter, beispielsweise Druck oder Temperatur, innerhalb des Kartenkörpers während des Herstellungsvorganges aufzuzeichnen und zu einem späteren Zeitpunkt auszulesen und auszuwerten. Somit sind eine Kontrolle der Herstellungsqualität des Kartenkörpers über eine Prüfung der Verarbeitungsparameter möglich ohne den Kartenkörper zerstören zu müssen. Durch das Auslesen und Auswerten der gemessenen Werte der Umgebungsparameter kann eine effiziente Überprüfung des Herstellungsprozesses erfolgen, so dass eine zuverlässige Qualitätssicherung bei der Herstellung der Wert- und Sicherheitsdokumente möglich ist. Insbesondere kann durch die Sensoren ein Profil der während der Herstellung im Kartenkörper wirkenden Umgebungsparameter erstellt werden, so dass eine genaue Anpassung der Umgebungsparameter möglich ist.

Unter einem "Wert-, Sicherheits- oder Ausweisdokument" wird im Folgenden ein papier- und/oder kunststoffbasiertes Dokument verstanden, auf dem personenspezifische und/oder dokumentenspezifische Informationen optisch lesbar aufgebracht sind, die eine Identifizierung des Nutzers oder des Dokumentes, beispielsweise für die Freigabe und Nutzung bestimmter Dienste oder Funktionen ermöglicht. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Frachtbriefe oder sonstige Berechtigungsnachweise. Beispielsweise kann das Dokument auch ein Wertgutschein oder eine Zugangskarte sein.

Unter einem "Chip" wird hier insbesondere ein Halbleiterchip mit einer integrierten elektronischen Schaltung verstanden. Bei dem Chip kann es sich um einen Speicherchip zur Speicherung von Daten und/oder einem Controller zur Kommunikation mit einem externen Lesegerät handeln. Die Einkopplung der Energie zur Energieversorgung des Chips erfolgt über die Antenne. Die Kommunikation mit dem externen Lesegerät kann beispielsweise nach einem RFID- oder NFC-Verfahren über dieselbe Antenne erfolgen. Unter einem Chip wird erfindungsgemäß auch eine integrierte elektronische Schaltung verstanden, die ganz oder teilweise drucktechnisch aufgebracht ist, wie z. B. mittels leitfähiger Tinte, insbesondere eine polymerelektronische Schaltung.

Unter "Schnittstellen" werden hier jegliche Vorrichtungen am Computersystem bzw. am Telekommunikationsendgerät verstanden, über die eine Verbindung zu einem Kommunikationsnetzwerk aufgebaut werden kann. Die Schnittstellen können beispielsweise für eine drahtlose Kommunikation mit einem Kommunikationsnetzwerk ausgebildet sein. Es ist aber auch möglich, dass die Schnittstellen zur Anbindung des Computersystems oder des Telekommunikationsendgerätes an ein kabelgebundenes Kommunikationsnetzwerk ausgebildet sind. Die Schnittstellen können für eine drahtlose und/oder eine kontaktbehaftete Kommunikation ausgebildet sein.

Unter einer "Chipkarte" wird eine Kunststoffbasierte Karte verstanden, in der ein Chip sowie eine Schnittstelle vorgesehen sind.

Der Sensor kann beispielsweise ein Temperatursensor sein. Während der Herstellung des Kartenkörpers wird die Temperatur erfasst, so dass nach der Herstellung des Wert- oder Sicherheitsdokuments geprüft werden kann, ob die auf den Chip bzw. andere elektronische Bauteile wirkenden Temperaturen innerhalb definierter Parameter liegen oder ob die Temperaturen beispielsweise ausreichend hoch waren für eine zuverlässige Lamination der einzelnen Schichten eines Kartenkörpers. Insbesondere kann ein Temperaturprofil erstellt werden.

Der Sensor kann auch ein Drucksensor sein. In dieser Ausführungsform werden die Druckverhältnisse während der Herstellung des Kartenkörpers erfasst, um nach der Herstellung des Wert- oder Sicherheitsdokuments zu prüfen, ob die auf den Chip bzw. andere elektronische Bauteile wirkenden Drücke innerhalb definierter Parameter liegen oder die Drücke ausreichend hoch waren für eine zuverlässige Herstellung des Kartenkörpers.

Es ist auch eine Kombination verschiedener Sensoren möglich, um mehrere Umgebungsparameter zu erfassen und zu speichern.

Der Sensor und der Speicher können vollständig getrennt von dem in der Chipkarte vorgesehenen Chip angeordnet und über einen Prozessor verbunden sein. Insbesondere kann die Anordnung aus Sensor und Speicher eine eigene Schnittstelle aufweisen, die von der Schnittstelle des Chips getrennt ist.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Es ist aber auch möglich, dass die Sensoren und der Speicher mit dem Chip verbunden sind, insbesondere auf dem Chip aufgebracht sind. Dadurch kann der Herstellungsaufwand der Chipkarte reduziert werden. Zudem kann zum Speichern der Werte der Umgebungsparameter ein im Chip vorhandene Speicher verwendet werden, so dass kein separater Speicher erforderlich ist.

Die für die Sensoren und den Speicher erforderliche Energie während der Herstellung des Kartenkörpers kann beispielsweise über eine Energieeinkoppelung zur Energiebereitstellung der Sensoren und/oder des Speichers über die mit den Sensoren und/oder dem Speicher gekoppelte Schnittstelle erfolgen. Die Schnittstelle kann beispielsweise eine RFID- oder NFC-Antenne sein, über die eine drahtlose Energieeinkoppelung erfolgen kann. Die Schnittstelle kann auch eine kontaktbehaftete Schnittstelle sein, die während der Herstellung des Kartenkörpers mit entsprechenden Kontakten außerhalb des Kartenkörpers verbunden ist. Unabhängig von der Art der Energieeinkoppeiung bietet diese Ausführungsform den Vorteil, dass keine interne Energieversorgung für die Sensoren und/oder den Speicher erforderlich ist.

Alternativ kann ein Energiespeicher vorgesehen sein, der mit dem Sensor gekoppelt ist und mit den Sensoren und dem Speicher im Kartenkörper angeordnet ist. Der Energiespeicher kann beispielsweise ein Kondensator sein, der unmittelbar vor der Herstellung des Kartenkörpers aufgeladen wird, oder eine Batterie. Ein Energiespeicher ermöglicht unabhängig von äußerer Energieeinkoppelung eine Energieversorgung der Sensoren und des Speichers.

Für die Qualitätskontrolle der Herstellung des Wert- oder Sicherheitsdokuments werden lediglich die Werte der Umgebungsparameter während der Herstellung des Kartenkörpers benötigt. Die Erfassung der Werte der Umgebungsparameter durch den Sensor und/oder die Speicherung der Werte im Speicher kann nach Beendigung der Herstellung des Kartenkörpers deaktiviert werden, um ein Erfassen und Speichern von Werten nach der Herstellung zu verhindern, um die zu speichernde Datenmenge zu begrenzen. Alternativ ist es auch möglich, dass jeweils nur der höchste gemessene Wert der Umgebungsparameter gespeichert wird und niedrigere gemessene Werte der Umgebungsparameter überschrieben werden.

Die Deaktivierung kann beispielsweise zeitgesteuert, oder durch den Empfang eines Beendigungssignal über die Schnittstelle erfolgen kann. Bei Verwendung eines Energiespeichers kann dieser so dimensioniert sein, dass eine Energiebereitstellung für einen ausreichenden Zeitraum während der Herstellung sichergestellt ist. Alternativ kann, beispielsweise bei einer Energieeinkoppelung über die Schnittstelle, eine Beendigung des Aufzeichnungsprozesses erfolgen, indem ein Beendigungssignal an die Sensoren oder einen mit den Sensoren gekoppelten Chip gesendet wird. Alternativ kann der Sensor so eingestellt sein, dass nur Werte der Umgebungsparameter oberhalb eines definierten Grenzwertes aufgezeichnet werden, so dass die Datenmenge der aufgezeichneten Werte der Umgebungsparameter begrenzt wird. Die Grenzwerte sind vorzugsweise so gewählt, dass nur die bei der Herstellung auftretenden Werte der Umgebungsparameter und nicht die im regulären Gebrauch der Chipkarte auftretenden Werte der Umgebungsparameter nicht aufgezeichnet werden.

Optional kann das Verfahren die folgenden Schritte umfassen:
- Herstellen einer Verbindung zwischen der Schnittstelle des Wert- oder Sicherheitsdokuments und einer Schnittstelle eines Dienst-Computersystems,
- Auslesen der Werte der Umgebungsparameter aus dem Speicher des Wert- oder Sicherheitsdokument durch das Dienst-Computersystem,
- Speichern der Werte der Umgebungsparameter in einem Speicher des Dienst-Computersystems.

Die Werte können nach der Herstellung, vorzugsweise unmittelbar nach der Herstellung, ausgelesen werden, beispielsweise, um diese auszuwerten, um den Herstellungsprozess in Abhängigkeit von dieser Auswertung anzupassen oder zu optimieren und/oder um eine Prüfung durchzuführen, ob der Chip während der Herstellung zu hohen Temperaturen oder Drücken ausgesetzt war. Der Prozess kann über diese Werte auch gesteuert bzw. geregelt werden, wodurch eine automatisierte Prozesssteuerung nach dem Modell der statistischen Prozesskontrolle (SPC) möglich ist.

Die Werte der Umgebungsparameter können auch für eine spätere Auswertung gespeichert werden. Beispielsweise können diese Werte bei einer späteren Reklamation des Wert-, Sicherheits- oder Ausweisdokuments ausgewertet werden, um Fehler während des Herstellungsprozesses auszuschließen. Vorzugsweise ist dem Wert-, Sicherheits- oder Ausweisdokument eine ID zugeordnet wird und die Werte werden im Speicher des Dienst-Computersystems der ID der Chipkarte zugeordnet. Dies ermöglicht eine spätere Zuordnung der Werte der Umgebungsparameter zu einem bestimmten Wert-, Sicherheits- oder Ausweisdokument.

Der Speicher kann beispielsweise ein temporärer Speicher sein und die Werte der Umgebungsparameter werden nach dem Auslesen gelöscht. Vorzugsweise erfolgt das Löschen derart, dass eine Widerherstellung der Werte nicht möglich ist. Dadurch ist sichergestellt, dass Herstellungsparameter nicht zu einem späteren Zeitpunkt ausgelesen und dadurch Rückschlüsse auf das Herstellungsverfahren gezogen werden können. Beispielsweise kann ein flüchtiger Speicher verwendet werden.

Unter einem "flüchtigen elektronischen Speicher" wird ein Speicher verstanden, beispielsweise ein Arbeitsspeicher, der Daten nur solange speichert wie eine Stromzufuhr vorhanden ist. Sobald die Stromzufuhr unterbrochen ist, verlieren diese Speicher ihren Inhalt. Ein flüchtiger Speicher ist beispielsweise ein Random Access Memory (RAM), ein dynamic-RAM (DRAM), ein Static-RAM (SRAM). Die Energieversorgung muss also bis zum Auslesen des Speichers sichergestellt sein. Beispielsweise kann ein interner Energiespeicher so bemessen sein, dass dieser für eine ausreichend lange Zeit Energie bereitstellt.

Die Verwendung eines flüchtigen Speichers zum Speichern der Werte der Umgebungsparameter hat den Vorteil, dass diese nur während des Herstellungsvorganges und bis zum Auslesen gespeichert werden und nach Beendigung des Vorgangs und einer anschließenden Unterbrechung oder Beendigung der Stromzufuhr automatisch gelöscht werden. Ein aktives Löschen der Werte ist somit nicht erforderlich. Wird die Energie über die Schnittstelle eingekoppelt, muss bei einem solchen Speicher sichergestellt sein, dass bis zum Auslesen der Werte keine Unterbrechung der Energiezufuhr erfolgt.

Alternativ kann der Speicher ein permanenter Speicher sein und die Werte der Umgebungsparameter sind dauerhaft gespeichert. Dadurch können die Werte zu einem späteren Zeitpunkt unabhängig von einer Speicherung auf einem Dienst-Computersystem ausgelesen und ausgewertet werden. Der Speicher kann beispielsweise ein nichtflüchtiger Speicher sein.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Werden die Werte der Umgebungsparameter nach dem Auslesen nicht gelöscht, ist der Speicher vorzugsweise geschützt und ein Zugriff auf den Speicher nur bei erfolgreicher Authentifizierung des Dienst-Computersystems erfolgt. Beispielsweise können die Werte in einem geschützten Bereich des Speichers des Chips abgelegt werden.

Unter einem "geschützten Speicherbereich" oder einem "geschützten Speicher" wird hier ein Speicherbereich oder ein Speicher verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Der Kartenkörper kann mit einem beliebigen Verfahren hergestellt werden. Beispielsweise kann der Kartenkörper laminiert werden, wobei der Sensor und der Speicher in einer Lage mit dem Chip angeordnet werden können, um die Druck- und Temperaturverhältnisse während der Herstellung in dieser Lage erfassen zu können. Der Sensor und/oder der Speicher können aber auch in einer weiteren Schicht angeordnet sein.

Alternativ kann der Kartenkörper in einem Kunststoffspritzgussverfahren oder in einem 3-D-Druck-Verfahren hergestellt werden.

Das Wert- oder Sicherheits- oder Ausweisdokuments kann einen geschützten Speicherbereich aufweisen, in dem personen- und/oder dokumentenspezifische Informationen gespeichert sind.

Im Weiteren werden Ausführungsformen der Erfindung mit Bezugnahme auf die Zeichnungen erläutert. In diesen zeigen:
- Figur 1: eine schematische Darstellung einer ersten Ausführungsform eines Wert- oder Sicherheits- oder Ausweisdokuments;
- Figur 2: eine schematische Darstellung einer ersten Ausführungsform einer Baugruppe zur Herstellung des Wert- oder Sicherheitsdokuments aus Figur 1;
- Figur 3: ein Ablaufdiagramm einer ersten Ausführungsform eines Herstellungsverfahrens für das Wert- oder Sicherheitsdokument aus Figur 1; und
- Figur 4: eine schematische Darstellung einer zweiten Ausführungsform eines Wert- oder Sicherheits- oder Ausweisdokuments.

Elemente der nachfolgenden Ausführungsformen, die einander gleichen oder einander entsprechen, sind jeweils mit identischen Bezugszeichen gekennzeichnet.

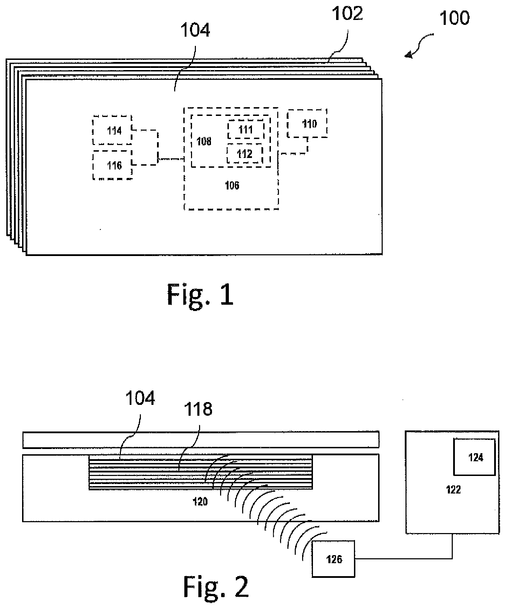

Figur 1 zeigt ein Wert-, Sicherheits- oder Ausweisdokument 100 mit einer Chipkarte 102. In der gezeigten Ausführungsform besteht das Wert-, Sicherheits- oder Ausweisdokument 100 lediglich aus der Chipkarte 102. Es ist aber auch denkbar, dass das Wert-, Sicherheits- oder Ausweisdokument 100 weitere Elemente aufweist, beispielsweise einen Schutzeinband, papier- oder kunststoffbasierte Seiten oder weitere elektronische Bauteile.

Die Chipkarte 102 hat einen Kartenkörper 104, in dem ein Chip 106 mit einem Speicher 108 vorgesehen sind. Der Speicher 108 weist mehrere Speicherbereiche 111, 112 auf, wobei in einem ersten, geschützten Speicherbereich 111 personen- und/oder dokumentenspezifische Daten gespeichert werden können. Ein Zugriff, das heißt ein Lesezugriff oder ein Schreibzugriff, auf diese Daten von einem mit dem Speicher gekoppelten Prozessor ist nur dann ermöglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln. Der Speicher 108 kann auch weitere Speicherbereiche aufweisen. Des Weiteren ist eine Schnittstelle 110 vorgesehen, über die die personen- und/oder dokumentenspezifischen Daten aus dem Speicher 108 ausgelesen werden können.

In der Chipkarte sind des Weiteren Sensoren 114, 116 vorgesehen, wobei der Sensor 114 ein Drucksensor und der Sensor 116 ein Temperatursensor ist. Die Sensoren sind mit dem Speicher 108 verbunden. Die von den Sensoren gemessenen Werte der Umgebungsparameter können, wie nachfolgend erläutert wird, im Speicherbereich 112 des Speichers gespeichert werden.

Alternativ ist es auch möglich, dass die Sensoren 114, 116 mit einem separaten, vom Chip 106 getrennten Speicher verbunden sind, in dem die Werte der Sensoren 114, 116 gespeichert werden können.

Die Sensoren sind getrennt vom Chip 106, aber in unmittelbarer Nähe zu diesem angeordnet. Es ist auch möglich, dass die Sensoren 114, 116 auf dem Chip 106 angeordnet sind.

Die Schnittstelle kann eine drahtlose Schnittstelle sein, die beispielsweise nach einem RFID- oder NFC-Standard funktioniert und die Einkoppelung von Energie in die Chipkarte sowie einen Datenaustausch zwischen der Chipkarte und einem Dienst-Computersystem ermöglicht.

Alternativ kann die Schnittstelle eine kontaktbehaftet Schnittstelle sein.

Es ist auch möglich, dass mehrere Schnittstellen vorgesehen sind, beispielsweise eine Schnittstelle für eine Energieeinkoppelung und eine Schnittstelle für einen Datenaustausch mit dem Speicher 108. Ist ein separater Speicher für die Sensoren vorgesehen, können auch separate Schnittstellen für diesen Speicher bzw. für eine separate Energieversorgung dieses Speichers oder der Sensoren vorgesehen sein.

Der Kartenkörper 104 besteht aus mehreren Schichten 118 aus Kunststoff, die mittels Lamination miteinander verbunden werden. Die elektronischen Bauteile werden auf einzelne Lagen aufgedruckt oder zwischen diesen angeordnet.

Bei den Schichten handelt es sich um Kunststoff, beispielsweise Polycarbonat (PC), insbesondere Bisphenol-A-Polycarbonat, Polyethylenterephthalat (PET), deren Derivaten wie Glykol-modifiziertem PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplatischen Elastomeren (TPE), insbesondere thermoplastischem Polyurethan (TPU), Acrylnitril-Butadien-Styrol (ABS), und/oder Papier sowie deren Derivate.

Ferner kann das Dokument auch aus einer Kombination von mehreren dieser Materialien bestehen. Bevorzugt besteht das Wert- oder Sicherheitsdokument aus PC oder PC/TPU/PC. Bevorzugt wird die Chipkarte aus 3 bis 12, besonders bevorzugt 4 bis 10 Folien, hergestellt.

Typischerweise erfolgt die Lamination von PC in einer Heißpresse 120 (siehe Figur 2) bei 170°C bis 200°C und einem Druck von 50-600 N/cm² sowie in einer Kühleresse bei einem Druck von 50-800 N/cm².

Alternativ kann der Kartenkörper 104 auch mit einem Kunststoff-Spritzgußverfahren oder in einem 3-D-Druckverfahren hergestellt sein.

Bei einem Kunststoff-Spritzgußverfahren werden der Chip 106, die Sensoren 114, 116, der Speicher 108 sowie weitere Bauteile in eine Spritzgußform eingelegt. Anschließend wird der verflüssige Kunststoff, der den Kartenkörper 104 bildet, unter Druck in die Form eingespritzt. Nach dem Aushärten des Kunststoffes kann die fertige Chipkarte 102 aus der Form entnommen werden.

Bei einem 3-D-Druckverfahren erfolgt ein schichtweiser Aufbau der Chipkarte durch Härtungs- oder Schmelzvorgänge von flüssigen oder festen Werkstoffen.

Bei allen Herstellungsverfahren wirken auf den Kartenkörper und somit den Chip hohe Drücke und/oder Temperaturen. Diese sind zum einen erforderlich, um eine zuverlässige Verbindung der Schichten 118 bzw. bei alternativen Herstellungsverfahren, eine zuverlässige Herstellung des Kartenkörpers, zu erreichen. Zum anderen dürfen diese nicht zu hoch sein, um die Funktionsfähigkeit der elektronischen Bauteile zu gewährleisten. Es ist also sicherzustellen, dass die Temperaturen und Drücke innerhalb vorher definierten Bereiche liegen.

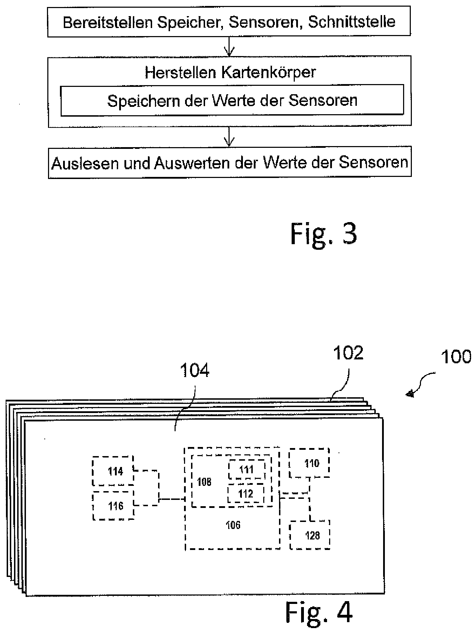

Die Prüfung der Temperaturen und Drücke während der Herstellung des Kartenkörpers 104 erfolgt über die Sensoren 114, 116, Der Ablauf eines Verfahrens zur Herstellung der Chipkarte 102 ist in Figur 3 dargestellt.

In einem ersten Schritt werden die elektronischen Bauteile, also die Sensoren 114, 116, der Speicher 108, der Chip 106 sowie die Schnittstelle 110 bereitgestellt und gegebenenfalls miteinander verbunden.

Anschließend werden die elektronischen Bauteile zwischen den Schichten des Kartenkörpers positioniert. Es ist auch möglich, dass die elektronischen Bauteile auf einzelne Schichten aufgedruckt oder aufgeklebt sind. Insbesondere können die Bauteile auf verschiedenen Schichten 118 angeordnet sein und durch das Zusammenfügen der Schichten 118 miteinander verbunden werden. Lediglich die Sensoren 114, 116 müssen mit dem Speicher 108 verbunden sein, um Werte der Sensoren im Speicher 108 speichern zu können. Des Weiteren muss eine Energieversorgung für die Sensoren 114, 116 und den Speicher 108 bereitgestellt werden, beispielsweise, indem die Schnittstelle 110 mit den Sensoren 114, 116 und/oder dem Speicher 108 verbunden wird.

Die Schichten 118 werden anschließend in die Heißpresse 120 eingelegt, um diese mittels Druck und Hitze miteinander zu verbinden.

Vor dem Beginn des Laminiervorgang wird ein hochfrequentes elektromagnetisches Wechselfeld angelegt, über das die Sensoren 114, 116 und der Speicher 108 über die Schnittstelle 110 mit Strom versorgt werden.

Wird eine kontaktbehaftete Schnittstelle verwendet, kann eine Energieversorgung auch über diese erfolgen, indem die Schnittstelle mit einer Energiequelle außerhalb des Kartenkörpers verbunden wird.

Anschließend wird der Kartenkörper 104 hergestellt, indem die einzelnen Schichten 118 miteinander laminiert werden.

Die Sensoren 114, 116 messen während des Herstellungsvorgangs des Kartenkörpers 104 die Temperatur und den Druck im Inneren des Kartenkörpers 104 und übermitteln die gemessenen Werte der Umgebungsparameter an den Speicher 108. Die Werte werden im Speicher 108 gespeichert. Das Speichern der Werte kann beispielsweise kontinuierlich oder periodisch erfolgen, so dass aus den Werten ein Temperatur- oder Druckprofil erstellt werden kann. Alternativ können nur Werte oberhalb vorher definierter Grenzwerte abgespeichert werden.

Nach Beendigung des Laminationsvorgangs wird die Chipkarte aus der Heißpresse 18 entnommen.

Anschließend wird die Schnittstelle 110 mit einer Schnittstelle 124 eines Dienst-Computersystems 122 verbunden. Über die Schnittstellen 110, 124 kann das Dienst-Computersystem122 die von den Sensoren 114, 116 gemessenen Werte der Umgebungsparameter aus dem Speicher 108 auslesen und im Speicher 126 des Dienst-Computersystems 122 speichern.

Die Werte der Umgebungsparameter können unmittelbar nach dem Herstellungsvorgang ausgewertet werden, beispielsweise, um sicherzustellen, dass der Chip und weitere elektronische Bauteile keiner zu großen Hitze ausgesetzt waren und/oder ob Druck und Temperatur ausreichend hoch für eine zuverlässige Verbindung der einzelnen Schichten 118 waren. Über die Auswertung kann beispielsweise auch sichergestellt bzw. kontrolliert werden, dass die definierten Prozessparameter bzw. die Werte der Umgebungsparameter während der Herstellung innerhalb einer definierten Streubreite eingehalten werden. In diesem Fall ist es wichtig, dass die Umgebungsparameter über einen zeitlichen Verlauf aufgezeichnet werden.

Alternativ können die Werte der Umgebungsparameter gespeichert werden, um diese zu einem späteren Zeitpunkt auszuwerten. Vorzugsweise ist dem Wert-, Sicherheits- oder Ausweisdokument eine ID zugeordnet und die Werte der Umgebungsparameter werden im Speicher 126 des Dienst-Computersystems 122 dieser ID zugeordnet. Dies ermöglicht einen späteren Zugriff auf die Werte, um beispielsweise bei einer späteren Reklamation zu prüfen oder nachzuweisen, ob bei der Herstellung vorgegebene Temperaturen oder Drücke nicht überschritten wurden.

Nach dem Auslesen der Werte der Umgebungsparameter werden diese im Speicher 108 über das Dienst-Computersystem 122 gelöscht, so dass im späteren Betrieb der Chipkarte 102 keine Rekonstruktion dieser Werte möglich ist.

Alternativ können die Werte der Umgebungsparameter auch im Speicher 108 dauerhaft gespeichert werden, so dass diese zu einem späteren Zeitpunkt, beispielsweise bei einem Defekt der Chipkarte 102 ausgelesen werden können. Vorzugsweise sind die Werte in einer solchen Ausführungsform im Speicher 108 derart geschützt, beispielsweise in einem geschützten Speicherbereich, dass ein Zugriff auf die Werte nur nach vorangegangener erfolgreicher Authentifizierung möglich ist, beispielsweise durch Ausführung eines kryptographischen Protokolls. Dadurch ist sichergestellt, dass Herstellungsparameter, wie Druck oder Temperatur, nicht von Unbefugten ausgelesen werden können, wodurch die Fälschungssicherheit der Chipkarte 102 erhöht werden könnte.

Alternativ kann auch ein flüchtiger Speicher zur Speicherung der Werte der Umgebungsparameter verwendet werden, der nach Beendigung der Energiezufuhr automatisch gelöscht wird. In einer solchen Ausführungsform ist sicherzustellen, dass die Energiezufuhr während des Herstellungsvorgangs bis zum Auslesen der Werte nicht unterbrochen wird, um die ermittelten Werte auslesen und auswerten zu können.

Nach dem Auslesen der Werte der Umgebungsparameter und/oder dem Beendigen des Herstellungsprozesses kann die weitere Erfassung und Aufzeichnung der Werte deaktiviert werden, beispielsweise indem das Dienst-Computersystem 122 ein Beendigungssignal an die Chipkarte 102, den Chip 106 oder die Sensoren 114, 116 sendet. Dies verhindert, dass bei einer erneuten Koppelung der Chipkarte 102 mit einer Energiequelle, beispielsweise beim Auslesen von Daten aus dem Speicher 108, erneut Werte über die Sensoren 114, 116 erfasst und gespeichert werden.

In Figur 4 ist eine zweite Ausführungsform eines Wert-, Sicherheits- oder Ausweisdokuments 100 gezeigt. Der Aufbau Wert-, Sicherheits- oder Ausweisdokuments 100, insbesondere der Chipkarte 102, entspricht im Wesentlichen dem Aufbau des in Figur 1 gezeigten Wert-, Sicherheits- oder Ausweisdokuments 100.

Die Chipkarte 102 weißt lediglich zusätzlich einen mit den Sensoren 114, 116 und dem Speicher 108 gekoppelten Energiespeicher 128 auf. Der Energiespeicher 128 kann eine Batterie sein. Es ist aber auch möglich, dass der Energiespeicher 128 ein Kondensator ist. Die Batterie oder der geladene Kondensator sind so dimensioniert, dass eine ausreichende Stromversorgung der Sensoren 114, 116 und des Speichers 108 während des Herstellungsprozesses und optional während des Auslesevorgangs sichergestellt ist.

Ist der Energiespeicher 128 eine Batterie, wird diese vorzugsweise unmittelbar vor dem Herstellen des Kartenkörpers mit den Sensoren 114, 116 und dem Speicher 108 verbunden, um ein vorzeitiges entladen zu verhindern. Ist der Energiespeicher 128 ein Kondensator, wird dieser vorzugsweise unmittelbar vor dem Herstellen des Kartenkörpers 104 aufgeladen.

Unabhängig von der Form des Energiespeichers 128 bietet dieser während des Herstellungsprozesses des Kartenkörpers 104 eine ausreichende Energieversorgung, um während des Herstellungsprozesses die Werte der Umgebungsparameter über die Sensoren 114, 116 zu erfassen und im Speicher 108 zu speichern. Es ist somit keine externe Energiequelle erforderlich.

Der Herstellungsvorgang des Kartenkörpers 104 erfolgt, wie in Figur 3 beschrieben, wobei eine Koppelung mit der Schnittstelle 110 nur nach dem Herstellen des Kartenkörpers zum Auslesen der Werte der Umgebungsparameter aus dem Speicher 198 erforderlich ist. Nach der Herstellung des Kartenkörpers 104 erfolgt ein Auslesen und anschließendes Löschen der Werte im Speicher 108.

Wird ein flüchtiger Speicher zum Speichern der Werte verwendet, werden die Werte nach Beendigung der Energieversorgung, also nach Entleeren des Energiespeichers 128, automatisch gelöscht.

Die Verwendung eines Energiespeichers bietet zudem den Vorteil, dass die Erfassung und Speicherung der Werte zeitlich begrenzt ist, nämlich auf die Zeit der Energiebereitstellung durch den Energiespeicher 128. Ein permanentes Erfassen und Speichern der Werte über einen längeren Zeitraum, kann so ohne aktive Deaktivierung vermieden werden. Alternativ oder zusätzlich kann aber auch ein Beendigungssignal vom Dienst-Computersystem 122 an die Chipkarte 102 gesendet werden.

Um die Anzahl der Werte der Umgebungsparameter zu begrenzen, können die Sensoren 114, 116 und/oder der Speicher 108 auch so konfiguriert sein, dass diese nur Werte der Umgebungsparameter oberhalb definierter Grenzwerte erfassen und/oder aufzeichnen. Dadurch können bei entsprechender Energieversorgung, beispielsweise über die Schnittstelle 110 oder einen entsprechend ausgelegtem Energiespeicher 128 auch spätere Ereignisse, bei denen zu hohe Temperaturen oder Drücke auf die Chipkarte wirken, protokolliert werden.

Unabhängig von der Ausführungsform ist sicherzustellen, dass die Sensoren 114, 116 während des Herstellungsprozesses Werte der Umgebungsparameter erfassen und diese im Speicher gespeichert werden, um den Temperatur- und/oder Druckverlauf während der Herstellung der Chipkarte zu protokollieren. Abhängig von den verwendeten Herstellungsverfahren können auch andere Umgebungsparameter erfasst werden, die für die Herstellung des Wert-, Sicherheits- oder Ausweisdokuments relevant sind.

### Bezugszeichenliste

- 100: Wert-, Sicherheits- oder Ausweisdokument
- 102: Chipkarte
- 104: Kartenkörper
- 106: Chip
- 108: Speicher
- 110: Schnittstelle
- 111: Speicherbereiche
- 114: Sensor
- 116: Sensor
- 118: Schichten
- 120: Heißpresse
- 122: Dienst-Computersystems
- 124: Schnittstelle
- 126: Speicher
- 128: Energiespeicher

## Patentansprüche

1. Verfahren zur Herstellung eines Wert-, Sicherheits- oder Ausweisdokumentes (100), das eine Chipkarte (102) mit einem Kartenkörper (104) aufweist, wobei im Kartenkörper (104) zumindest ein Sensor (114, 116) zur Erfassung von Umgebungsparametern, ein mit dem Sensor (114, 116) gekoppelter Speicher (108), der die erfassten Werte der Umgebungsparameter des Sensors (114, 116) speichert, ein Chip (106), auf dem personen- und/oder dokumentenspezifische Informationen gespeichert werden können, sowie zumindest eine Schnittstelle (110) zum Auslesen des Speichers (108) und/oder des Chips (106) vorgesehen sind, mit folgenden Schritten:
- Bereitstellen des Sensors (114, 116), des Speichers (108) sowie der Schnittstelle (110),
- Herstellen des Kartenkörpers (104), wobei der Sensor (114, 116), der Speicher (108) und die Schnittstelle (110) zumindest abschnittsweise innerhalb des Kartenkörpers (104) angeordnet sind, wobei der Kartenkörper (104) laminiert, spritzgegossen oder in einem 3-D-Druck-Verfahren hergestellt wird, und
- Erfassen von Umgebungsparameter mit dem Sensor (114, 116) während der Herstellung des Kartenkörpers (104) und Speichern der erfassten Werte der Umgebungsparameter im Speicher (108).

2. Verfahren nach Anspruch 1, wobei der Sensor (114) ein Temperatursensor ist und als Umgebungsparameter die Temperatur während der Herstellung des Kartenkörpers (104) erfasst wird.

3. Verfahren nach Anspruch 1 oder 2, wobei der Sensor (116) ein Drucksensor ist und als Umgebungsparameter die Druckverhältnisse während der Herstellung des Kartenkörpers (104) erfasst werden.

4. Verfahren nach einem der vorhergehenden Ansprüche, wobei der Sensor (114, 116) und der Speicher (108) mit dem Chip (106) gekoppelt sind, insbesondere auf dem Chip (106) aufgebracht sind.

5. Verfahren nach einem der vorhergehenden Ansprüche, wobei während der Herstellung des Kartenkörpers (104) eine Energieeinkoppelung zur Energieversorgung der Sensoren (114, 116) und/oder des Speichers (108) über die Schnittstelle (110) erfolgt.

6. Verfahren nach einem der Ansprüche 1 bis 4, wobei ein Energiespeicher (128) vorgesehen ist, der mit dem Sensor (114, 116) gekoppelt wird, insbesondere ein Kondensator, der unmittelbar vor der Herstellung des Kartenkörpers aufgeladen wird, oder eine Batterie.

7. Verfahren nach einem der vorhergehenden Ansprüche, wobei die Erfassung Werte der Umgebungsparameter durch den Sensor (114, 116) und/oder die Speicherung der Werte der Umgebungsparameter im Speicher (108) nach Beendigung der Herstellung des Kartenkörpers (104) deaktiviert werden, wobei die Deaktivierung zeitgesteuert, oder durch den Empfang eines Beendigungssignal über die Schnittstelle (110) erfolgen kann.

8. Verfahren nach einem der vorhergehenden Ansprüche, wobei das Verfahren folgende Schritte umfasst:
- Aufbau einer Verbindung zwischen der Schnittstelle (110) des Wert-, Sicherheits- oder Ausweisdokuments (100) und einer Schnittstelle (124) eines Dienst-Computersystems (122),
- Auslesen der Werte der erfassten Umgebungsparameteraus dem Speicher (108) des Wert-, Sicherheits- oder Ausweisdokuments (100) durch das Dienst-Computersystem (122),
- Speichern der ausgelesenen erfassten Werte der Umgebungsparameter in einem Speicher (126) des Dienst-Computersystems (122).

9. Verfahren nach Anspruch 8, wobei dem Wert-, Sicherheits- oder Ausweisdokument (100) eine ID zugeordnet wird und die Werte der Umgebungsparameter im Speicher (126) des Dienst-Computersystems (122) der ID des Wert-, Sicherheits- oder Ausweisdokuments (100) zugeordnet werden.

10. Verfahren nach einem der Ansprüche 8 und 9, wobei der Speicher (108) ein temporärer Speicher ist und die Werte der Umgebungsparameter nach dem Auslesen gelöscht werden.

11. Verfahren nach einem der Ansprüche 1 bis 9, wobei der Speicher (108) ein permanenter Speicher ist.

12. Verfahren nach einem der vorhergehenden Ansprüche, wobei der Speicher (108) geschützt ist und ein Zugriff auf den Speicher (108) nur bei erfolgreicher Authentifizierung des Dienst-Computersystems (122) erfolgt.

13. Wert-, Sicherheits- oder Ausweisdokument (100), das eine Chipkarte (102) mit einem Kartenkörper (104) aufweist, wobei im Kartenkörper (104) zumindest ein Sensor (114, 116) zur Erfassung von Umgebungsparametern, ein mit dem Sensor (114, 116) gekoppelter Speicher (108), der die erfassten Werte der Umgebungsparameter des Sensors (114, 116) speichert, ein Chip (106), auf dem personen- und/oder dokumentenspezifische Informationen gespeichert werden können, sowie zumindest eine Schnittstelle (110) zum Auslesen des Speichers (108) und/oder des Chips (106) vorgesehen sind,
**dadurch gekennzeichnet, daß**
das Wert-, Sicherheits- oder Ausweisdokument (100) mit einem Verfahren nach einem der vorhergehenden Ansprüche hergestellt ist, wobei der Kartenkörper (104) laminiert, spritzgegossen oder in einem 3-D-Druck-Verfahren hergestellt ist.

14. Wert-, Sicherheits- oder Ausweisdokument nach Anspruch 13, wobei die Chipkarte (102) einen geschützten Speicherbereich (111) aufweist, in den personen- und/oder dokumentenspezifische Informationen gespeichert sind.

## Claims

1. A method for producing a value, security or identity document (100) which has a smart card (102) with a card body (104), wherein, in the card body (104), there are provided at least one sensor (114, 116) for detecting environmental parameters, a memory (108) coupled to the sensor (114, 116), which memory stores the detected values of the environmental parameters of the sensor (114, 116), a chip (106) on which the person- and/or document-specific information may be stored, as well as at least one interface (110) for reading the memory (108) and/or the chip (106), said method comprising the following steps:
- providing the sensor (114, 116), the memory (108) as well as the interface (110);
- producing the card body (104), wherein at least portions of the sensor (114, 116), the memory (108) and the interface (110) are arranged in the card body (104), wherein the card body (104) is laminated, injection moulded, or produced in a 3D printing method; and
- detecting environmental parameters with the sensor (114, 116) during the production of the card body (104) and storing the detected values of the environmental parameters in the memory (108).

2. The method according to claim 1, wherein the sensor (114) is a temperature sensor and, as environmental parameter, the temperature during the production of the card body (104) is detected.

3. The method according to claim 1 or 2, wherein the sensor (116) is a pressure sensor and, as environmental parameter, the pressure conditions during the production of the card body (104) are detected.

4. The method according to one of the preceding claims, wherein the sensor (114, 116) and the memory (108) are coupled to the chip (106), in particular are mounted on the chip (106).

5. The method according to one of the preceding claims, wherein, during the production of the card body (104), energy for powering the sensors (114, 116) and/or the memory (108) is coupled in via the interface (110).

6. The method according to one of claims 1 to 4, wherein an energy store (128) is provided and is coupled to the sensor (114, 116), in particular a capacitor, which is charged immediately prior to the production of the card body, or a battery.

7. The method according to one of the preceding claims, wherein the detection of values of the environmental parameters by the sensor (114, 116) and/or the storing of the values of the environmental parameters in the memory (108) are deactivated once the production of the card body (104) is complete, wherein the deactivation may be implemented in a time-controlled fashion or by the receipt of a completion signal via the interface (110).

8. The method according to one of the preceding claims, wherein the method comprises the following steps:
- establishing a connection between the interface (110) of the value, security or identity document (100) and an interface (124) of a service computer system (122);
- reading the values of the detected environmental parameters from the memory (108) of the value, security or identity document (100) by the service computer system (122);
- storing the read detected values of the environmental parameters in a memory (126) of the service computer system (122).

9. The method according to claim 8, wherein an ID is assigned to the value, security or identity document (100) and the values of the environmental parameters in the memory (126) of the service computer (122) are assigned to the ID of the value, security or identity document (100).

10. The method according to one of claims 8 and 9, wherein the memory (108) is a temporary memory and the values of the environmental parameters are deleted after reading.

11. The method according to one of claims 1 to 9, wherein the memory (108) is a permanent memory.

12. The method according to one of the preceding claims, wherein the memory (108) is protected and the memory (108) is accessed only in the event of successful authentication of the service computer system (122).

13. A value, security or identity document (100) which has a smart card (102) with a card body (104), there being provided, in the card body (104), at least one sensor (114, 116) for detecting environmental parameters, a memory (108) coupled to the sensor (114, 116), which memory stores the detected values of the environmental parameters of the sensor (114, 116), a chip (106) on which the person- and/or document-specific information may be stored, as well as at least one interface (110) for reading the memory (108) and/or the chip (106),
**characterised in that**
the value, security or identity document (100) is produced by a method according to one of the preceding claims, the card body (104) being laminated, injection moulded, or produced in a 3D printing method.

14. The value, security or identity document according to claim 13, wherein the smart card (102) has a protected memory area (111), in which person- and/or document-specific information is stored.

## Revendications

1. Procédé de production d'un document de valeur, de sécurité ou d'identité (100) qui présente une carte à puce (102) pourvue d'un corps de carte (104), où au moins un capteur (114, 116) pour la détection de paramètres environnementaux, une mémoire (108), couplée au capteur (114, 116) qui stocke les valeurs des paramètres environnementaux du capteur (114, 116), une puce (106), sur laquelle des informations spécifiques pour la personne et/ou le document, peuvent être stockées, ainsi qu'au moins une interface (110), permettant la lecture de la mémoire et/ou de la puce sont prévus, avec les étapes suivantes :
- la mise en place du capteur (114, 116), de la mémoire (108), ainsi que de l'interface (110),
- la production du corps de carte (104), où le capteur (114, 116), la mémoire (108) et l'interface (110) sont disposés au moins partiellement à l'intérieur du corps de carte (104), où le corps de carte (104) est laminé, moulé par injection ou produit dans un procédé d'impression en 3D, et
- la détection de paramètres environnementaux avec le capteur (114, 116) pendant la production du corps de carte (104) et le stockage des valeurs détectées des paramètres environnementaux dans la mémoire (108).

2. Procédé selon la revendication 1, dans lequel le capteur (114) est un capteur de température et la température est détectée en tant que paramètre environnemental pendant la production du corps de carte (104).

3. Procédé selon la revendication 1 ou la revendication 2, dans lequel le capteur (116) est un capteur de pression et les conditions de pression sont détectées en tant que paramètres environnementaux pendant la production du corps de carte (104).

4. Procédé selon l'une des revendications précédentes, dans lequel le capteur (114, 116) et la mémoire (108) sont couplés avec la puce (106), sont notamment rapportés sur la puce (106).

5. Procédé selon l'une des revendications précédentes, dans lequel, pendant la production du corps de carte (104), il y a un couplage d'énergie pour l'alimentation en énergie des capteurs (114, 116) et/ou de la mémoire (108) par le biais de l'interface (110).

6. Procédé selon l'une des revendications 1 à 4, dans lequel un accumulateur d'énergie (128) est prévu, qui est couplé avec le capteur (114, 116), notamment un condensateur, qui est chargé immédiatement avant la production du corps de carte, ou une batterie.

7. Procédé selon l'une des revendications précédentes, dans lequel la détection de valeurs des paramètres environnementaux est désactivée par le capteur (114, 116) et/ou le stockage des valeurs des paramètres environnementaux est désactivé après la fin de la production du corps de carte (104), où la désactivation peut être réalisée par commande temporisée ou par la réception d'un signal de fin par le biais de l'interface (110).

8. Procédé selon l'une des revendications précédentes, où le procédé comprend les étapes suivantes :
- l'établissement d'une liaison entre l'interface (110) du document de valeur, de sécurité et d'identité (100) et une interface (124) d'un système informatique de service (122),
- la lecture des valeurs des paramètres environnementaux détectés à partir de la mémoire (108) du document de valeur, de sécurité ou d'identité (100) par le système informatique de service (122),
- le stockage des valeurs des paramètres environnementaux détectés lus dans une mémoire (126) du système informatique de service (122).

9. Procédé selon la revendication 8, dans lequel un identifiant ID est associé au document de valeur, de sécurité ou d'identité (100) et les valeurs des paramètres environnementaux dans la mémoire (126) du système informatique de service (122) sont associées à l'ID du document de valeur, de sécurité ou d'identité (100).

10. Procédé selon l'une des revendications 8 et 9, dans lequel la mémoire (108) est une mémoire temporaire et les valeurs des paramètres environnementaux sont effacées après la lecture.

11. Procédé selon l'une des revendications 1 à 9, dans lequel la mémoire (108) est une mémoire permanente.

12. Procédé selon l'une des revendications précédentes, dans lequel la mémoire (108) est protégée et un accès à la mémoire (108) n'a lieu que pour une authentification réussie du système informatique de service (122).

13. Document de valeur, de sécurité ou d'identité (100) qui présente une carte à puce (102) pourvue d'un corps de carte (104), où au moins un capteur (114, 116) pour la détection de paramètres environnementaux, une mémoire (108) couplée au capteur (114, 116) qui stocke les valeurs des paramètres environnementaux du capteur (114, 116), une puce (106) sur laquelle des informations spécifiques pour la personne et/ou le document, peuvent être stockées, ainsi qu'au moins une interface (110) permettant la lecture de la mémoire et/ou de la puce sont prévus dans le corps de carte (104),
**caractérisé en ce que**
le document de valeur, de sécurité ou d'identité (100) est produit avec un procédé selon l'une des revendications précédentes, où le corps de carte (104) est laminé, moulé par injection ou produit dans un procédé d'impression en 3D.

14. Document de valeur, de sécurité ou d'identité (100) selon la revendication 13, dans lequel la carte à puce (102) présente une zone de mémoire (111) sécurisée dans laquelle sont stockées des informations spécifiques pour la personne et/ou le document.
